# EUROPEAN PATENT APPLICATION

(11) **EP 3 868 495 A1**
(43) Date of publication of application: **25.08.2021**
(21) Application number: 19873079.8
(22) Date of filing: 16.10.2019
(51) Int. Cl.: B22F 3/16, B22F 1/00, B22F 3/105, B22F 3/115, B22F 7/04, B33Y 10/00, C22C 1/05

(54) **CURED LAYER LAMINATION METHOD AND PRODUCTION METHOD FOR LAMINATED MOLDED ARTICLE**

(30) Priority: 17.10.2018 JP 2018196020
(71) Applicant: KABUSHIKI KAISHA KOBE SEIKO SHO (KOBE STEEL, LTD.), Hyogo 651-8585 (JP)
(72) Inventor:
(74) Representative: Müller-Boré & Partner Patentanwälte PartG mbB
(86) International application number: PCT/JP2019/040721
(87) International publication number: WO 2020/080425

(57) **Abstract**

A cured layer lamination method whereby: a powder material for cured layer formation is blown on to a base material and melted, said powder material having mixed therein a first powder including a stellite alloy and a second powder including a tungsten carbide; and cured layers of melted and hardened powder material are sequentially formed upon the base material. As the cured layers are formed further away from the base material in the lamination direction, at least either an input heat adjustment process or a content volume adjustment process are executed, said input heat adjustment process reducing the amount of heat input to the powder material when the cured layer is being formed and said content volume adjustment process increasing the second powder content in the powder material in the cured layer.

## Description

### TECHNICAL FIELD

The present invention relates to a method for depositing a hardened layer and a method for manufacturing an additively-manufactured object.

### BACKGROUND ART

In a process of manufacturing a metal component required to have high mechanical properties, various manufacturing methods are employed for improving component performances. For example, a method of overlaying a surface of a component with a material having excellent wear resistance and erosion resistance by welding or thermal spraying, a method of forming the entire component with a material satisfying the required properties by additive manufacturing or powder sintering performed by mold formation, hot isostatic pressing (HIP) or the like, is used. In addition, a method, in which a powder sintering compact having excellent mechanical properties is formed and the powder sintering compact is joined to a surface of a substrate by diffusion joining, brazing, or the like, is also used.

In particular, examples of the material having excellent wear resistance and erosion resistance include materials including metal, ceramics, or cermet. In the case of performing surface overlaying, molding, or additive manufacturing with the use of these materials, various techniques have been proposed for ensuring a strength of joining with a substrate, avoiding cracks during processing, and achieving high-density molded articles or additively-manufactured products.

For example, in Patent Literature 1, as a deposition material used for powder additive manufacturing, deposition particles having a special structure prepared from a first powder containing a ceramic and a second powder containing a metal are used. Patent Literature 1 discloses that when a plurality of kinds of single particles such as metal particles and ceramic particles are mixed and the mixture is used as a deposition material, a high-density built-up object including ceramic is efficiently manufactured.

Non-Patent Literature 1 describes a technique of coating a surface of a substrate with a composite material of a cobalt alloy and tungsten carbide by a laser powder spray melting method (Laser Metal Deposition: LMD) for improving wear resistance of the surface of the substrate.

### CITATION LIST

### PATENT LITERATURE

Patent Literature 1: JP-A-2017-114716

### NON- PATENT LITERATURE

Non-Patent Literature 1: Wear resistance in the soil of Stellite-6/WC coatings produced using laser cladding method (Int. Journal of Refractory Metals and Hard Materials, Vol. 64, 2017, pp. 20-26)

### SUMMARY OF INVENTION

### TECHNICAL PROBLEM

However, in the method described in Patent Literature 1, since a special deposition material prepared from the first powder and the second powder is used, a complicated process may be required for the preparation of the deposition material, and the material cost may be increased. This method is suitable for building up the entire component using the same kind of deposition material prepared from the first powder and the second powder. However, it is uncertain whether a layer having a uniform and high hardness can be partially applied without causing cracks in a case where a part of a component is additively built up using dissimilar materials.

In the method described in Non-Patent Literature 1, in order to increase the hardness of the entire overlay layer, it is necessary to increase an amount of tungsten carbide powder contained by the overlay layer. When the increase in the amount of tungsten carbide powder is attempted to be achieved by laser metal deposition (LMD), the risk of cracks during overlay processing is increased.

Further, in a case where a thickness of a hardfacing layer shown in Non-Patent Literature 1 is about 1 mm and the overlay deposition is continued under the same conditions, it is difficult to stably obtain a high-hardness layer having a thickness of several millimeters while avoiding the occurrence of cracks.

An object of the present invention is to provide a method for depositing a hardened layer that can stably form a high-hardness hardened layer having a thickness of several millimeters without causing a crack, and a method for producing an additively-manufactured object.

### SOLUTION TO PROBLEM

The present invention has the following configurations.
(1) A method for depositing a hardened layer, comprising sequentially depositing a hardened layer formed by spraying a powder material for forming a hardened layer, which is obtained by mixing a first powder containing a Stellite alloy with a second powder containing tungsten carbide, toward a substrate, and melting and solidifying the powder material on/above the substrate,
   wherein as the hardened layer to be formed is away from the substrate in a deposition direction, at least one of a heat input adjustment step and a content adjustment step is performed,
   the heat input adjustment step being a step of reducing a heat input for the powder material during formation of the hardened layer,
   the content adjustment step being a step of increasing a content of the second powder in the powder material for the hardened layer.
(2) A method for producing an additively-manufactured object, comprising:
   overlaying a target overlay member with a hardened layer by the method for depositing a hardened layer according to (1),
   wherein the substrate is the target overlay member.

### ADVANTAGEOUS EFFECTS OF INVENTION

In the present invention, a high-hardness layer having a thickness of several millimeters can be stably formed without causing a crack.

### BRIEF DESCRIPTION OF DRAWINGS

[FIG. 1] FIG. 1 is a schematic configuration diagram of a laser metal deposition device that performs laser metal deposition welding.
[FIG. 2] FIG. 2 is a schematic side view of an additively-manufactured object in which a plurality of hardened layers formed of a powder material is formed on a substrate.
[FIG. 3A] FIG. 3A is a photograph showing a cross section of an additively-manufactured object in Test Example 1.
[FIG. 3B] FIG. 3B is a photograph showing a cross section of an additively-manufactured object in Test Example 2.
[FIG. 3C] FIG. 3C is a photograph showing a cross section of an additively-manufactured object in Test Example 3.
[FIG. 3D] FIG. 3D is a photograph showing a cross section of an additively-manufactured object in Test Example 4.
[FIG. 3E] FIG. 3E is a photograph showing a cross section of an additively-manufactured object in Test Example 5.
[FIG. 3F] FIG. 3F is a photograph showing a cross section of an additively-manufactured object in Test Example 6.
[FIG. 3G] FIG. 3G is a photograph showing a cross section of an additively-manufactured object in Test Example 7.
[FIG. 3H] FIG. 3H is a photograph showing a cross section of an additively-manufactured object in Test Example 8.
[FIG. 3I] FIG. 3I is a photograph showing a cross section of an additively-manufactured object in Test Example 9.
[FIG. 4A] FIG. 4A is a graph showing a measurement result of Vickers hardness distribution of the additively-manufactured object in Test Example 1.
[FIG. 4B] FIG. 4B is a graph showing a measurement result of Vickers hardness distribution of the additively-manufactured object in Test Example 2.
[FIG. 4C] FIG. 4C is a graph showing a measurement result of Vickers hardness distribution of the additively-manufactured object in Test Example 3.
[FIG. 4D] FIG. 4D is a graph showing a measurement result of Vickers hardness distribution of the additively-manufactured object in Test Example 4.
[FIG. 4E] FIG. 4E is a graph showing a measurement result of Vickers hardness distribution of the additively-manufactured object in Test Example 5.
[FIG. 4F] FIG. 4F is a graph showing a measurement result of Vickers hardness distribution of the additively-manufactured object in Test Example 6.
[FIG. 4G] FIG. 4G is a graph of a measurement result of Vickers hardness distribution of the additively-manufactured object in Test Example 7.
[FIG. 5] FIG. 5 is a graph of measurement results of Vickers hardness distribution of the additively-manufactured object in Test Examples 8 and 9.

### DESCRIPTION OF EMBODIMENTS

Hereinafter, embodiments of the present invention are described in detail with reference to the drawings.

In a method of depositing a hardened layer in the present invention, a powder material for forming a hardened layer, which is obtained by mixing a first powder containing a Stellite alloy with a second powder containing tungsten carbide, is sprayed toward a substrate and is melted, and a hardened layer obtained by melting and solidifying the powder material is deposited on/above the substrate.

In the method of depositing a hardened layer, conditions for forming the hardened layer are changed as a hardened layer to be formed is away from the substrate in a deposition direction, as is described in detail below. Accordingly, a high-hardness hardened layer having a thickness of several millimeters can be stably formed without causing a crack.

In the following description, an example in which melting of a powder material for forming a hardened layer is performed by using laser metal deposition (LMD) welding, but the present invention is not limited to this example. For example, the present invention can also be suitably applied to laser additive manufacturing (LAM), direct metal laser sintering (DMLS), or the like. In particular, since a workpiece is welded using a welding robot in the case of laser metal deposition welding, a degree of freedom of a shape in the additive manufacturing can be improved as compared with a case where a workpiece is processed in a chamber.

### [Laser metal deposition device]

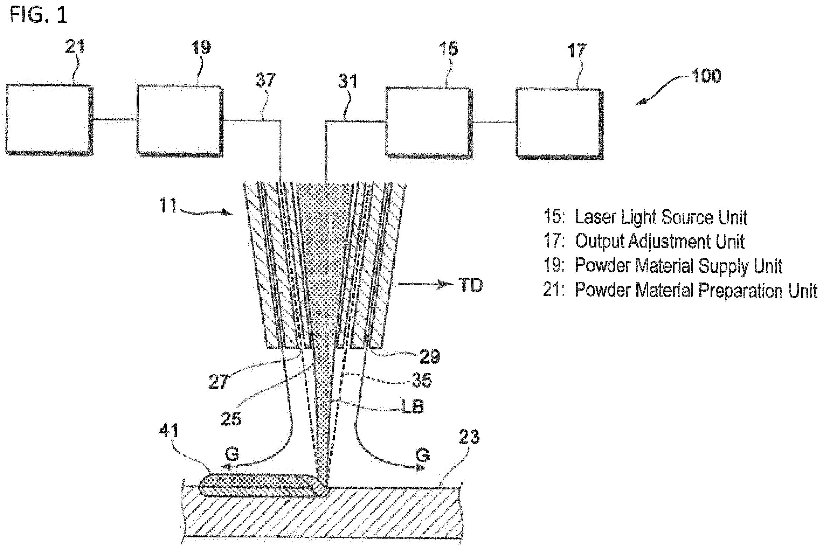

FIG. 1 is a schematic configuration diagram of a laser metal deposition device 100 that performs laser metal deposition welding.

The laser metal deposition device (hereinafter referred to as "LMD device") 100 shown in FIG. 1 includes a welding torch 11 that is attached to a multi-axis welding robot (not shown), a laser light source unit 15 that supplies laser light to the welding torch 11, an output adjustment unit 17 that adjusts a laser output of the laser light source unit 15, a powder material supply unit 19 that supplies a powder material 35 for forming a hardened layer described below to the welding torch 11, and a powder material preparation unit 21.

The welding torch 11 is supported by a robot arm (not shown) that can move relative to a substrate 23 as a target overlay member. The welding torch 11 is relatively moved along a desired welding line on the substrate 23 by driving of the robot arm. FIG. 1 shows a state in which welding is performed while moving the welding torch 11 along a welding direction TD.

A distal end of the welding torch 11 includes a laser radiation port 25, a powder material supply port 27, and a shielding gas supply port 29.

The laser irradiation port 25 is opened at a center of the distal end of the welding torch 11, and a laser beam LB is radiated from the laser radiation port 25 toward the substrate 23. The laser beam LB is oscillated by the laser light source unit 15 and guided to the welding torch 11 via a light guide system 31. The output adjustment unit 17 can optionally increase or decrease a heat input for a weld portion by adjusting the laser output of the laser light source unit 15.

The powder material supply port 27 is concentrically opened radially outward from the laser radiation port 25, and a powder material 35 supplied from the powder material supply unit 19 is ejected from the powder material supply port 27 toward the substrate 23 through a supply path 37. The powder material 35 is prepared by the powder material preparation unit 21, and a supply amount of the powder material 35 to the substrate 23 is adjusted by the powder material supply unit 19.

The powder material preparation unit 21 increases or decreases a content of a second powder in the powder material 35 supplied to the welding torch 11 by the powder material supply unit 19.

The powder material supply unit 19 ejects the powder material 35 from the powder material supply port 27 together with carrier gas from a carrier gas supply unit (not shown). The powder material 35 ejected toward the substrate 23 is melted by the condensed laser beam LB on a surface of the substrate 23 and then cooled and solidified to form a hardened layer (overlay layer) 41.

The shielding gas supply port 29 is concentrically opened outside the powder material supply port 27, and shielding gas G is supplied from the shielding gas supply port 29 toward the substrate 23. The shielding gas G prevents oxidation of the hardened layer 30 and surroundings thereof.

### [Powder material]

The powder material preparation unit 21 mechanically mixes a first powder containing a Co-Cr alloy or Co-Cr-W-C alloy steel (Stellite alloy in which "Stellite" is a registered trademark) that is a Co-based alloy with a second powder containing tungsten carbide, and prepares the powder material 35 for forming a hardened layer. The term "mechanically mixing" as used herein means stirring and mixing different kinds of powder materials with each other without special processing.

As the first powder, for example, Stellite #1, #6, #12, #21, and the like may be used. Further, as the second powder, for example, tungsten carbide powder (4670, manufactured by Höganös Corporation) may be used. As the first powder and the second powder, commercially available powder materials may be used as they are.

The powder material 35 contains tungsten carbide, which is a second powder, within a range of 10 to 19 mass% relative to the entire powder material 35.

### [Substrate]

The substrate 23 is flat plate-shaped steel and the shape is not limited to a flat plate shape. A plate with a curved surface, or one having an appropriate shape, such as a block body or a tubular body, is adopted depending on a shape of an additively-manufactured object to be produced. As a material of the substrate 23, besides steel such as stainless steel, a cobalt-based alloy or a nickel-based alloy may be used, and various materials may be used depending on product specifications or the like.

### [Formation of hardened layer (additively-manufactured body)]

The LMD device 100 shown in FIG. 1 performs laser metal deposition welding while moving the welding torch 11 by the robot arm, and repeatedly deposits a hardened layer 41, which is formed by melting and solidifying the powder material 35, on/above the substrate 23 for a plurality of times.

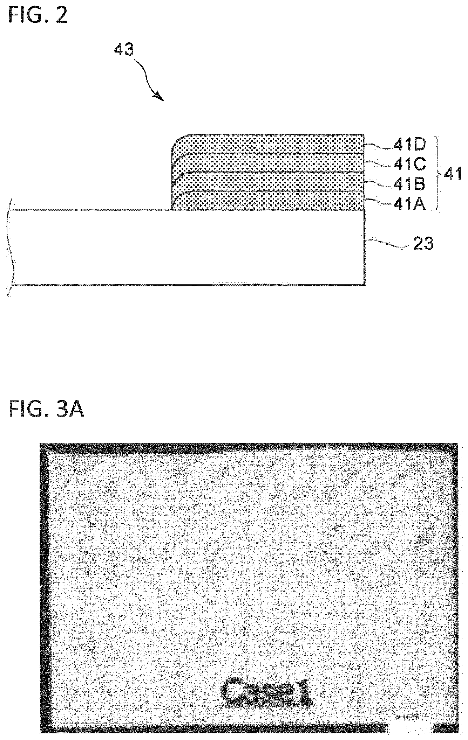

FIG. 2 is a schematic side view of an additively-manufactured object 43 in which a plurality of hardened layers 41 (four hardened layers 41A to 41D in this example) formed of the powder material 35 is formed on the substrate 23.

As shown in FIG. 2, the first hardened layer 41A is formed on the substrate 23 by the above-described LMD device 100. Then, the second hardened layer 41B is formed on the formed first hardened layer 41A. Similarly, the hardened layer 41C is deposited on the hardened layer 41B and the hardened layer 41D is deposited on the hardened layer 41C sequentially to build up the additively-manufactured object 43 having a desired shape.

### [Function and effect]

During the formation of the hardened layers 41A to 41D, when the hardened layers 41A to 41D on/above the substrate 23 are cooled, residual stress (tensile stress) is generated in the hardened layers 41A to 41D based on a difference between a coefficient of linear expansion of the substrate 23 and a coefficient of linear expansion of a hardened layer itself, and cracks are likely to occur in the hardened layer after cooling. In addition, cracks are likely to occur due to the formation of an embrittlement layer depending on a combination of materials. Therefore, in the method for depositing a hardened layer in the present embodiment, when the hardened layers 41A to 41D are formed, the hardness of the hardened layers increases gradually or stepwise as the hardened layer to be formed is away from the substrate 23 in the deposition direction. Accordingly, the occurrence of cracks in the hardened layer is prevented.

Specifically, at least one of a heat input adjustment step and a content adjustment step is performed as the hardened layer to be formed is away from the substrate 23 in the deposition direction.

The heat input adjustment step is a step of adjusting an output of a laser beam from the laser light source unit 15 by the output adjustment unit 17 to reduce a heat input to the powder material 35 based on the radiation of the laser beam B with distance from the substrate 23 in the deposition direction.

Thanks to this step, since the heat input for an area irradiated with the laser beam is reduced, temperature drop to achieve solidification of the powder material 35 once melted is faster as compared with a case where a heat input is large. That is, in a case where the heat input is large, a radiation area irradiated with the laser beam has a high temperature, and a periphery of the radiation area is also heated, so that heat capacity is increased. As a result, during cooling, the temperature drop is slow due to heat storage in a periphery of the radiation area irradiated with the laser beam, and the solidified structure tends to be coarsened (annealing effect). On the other hand, in a case where the heat input is small, the heat storage in a periphery of the radiation area irradiated with the laser beam is small. Therefore, the temperature drop becomes faster in combination with endothermic heat of the periphery, and the solidified structure tends to be miniaturized. As a result, the hardness of the hardened layer increases.

The method of adjusting the output of the laser beam is not limited to a method of increasing or decreasing the laser output of the laser light source unit 15. For example, an optical element such as an ND filter or an attenuator may be disposed in an optical path of a laser beam output at a constant light amount to adjust the light amount. In this case, the laser light can be stabilized regardless of the output.

The content adjustment step is a step of changing a content of the second powder in the powder material 35 by the powder material preparation unit 21 to reduce the content of the second powder with distance from the substrate 23 in the deposition direction.

Thanks to this step, the content of the second powder having a high hardness of the material itself is increased, so that the hardness of the hardened layer can be increased.

Only one of the heat input adjustment step and the content adjustment step may be performed, or both of them may be performed at the same time. When the two steps are performed, the occurrence of cracks can be more reliably prevented by a synergistic effect of increasing the hardness.

Through the above steps, an average Vickers hardness is set to 780 Hv or more and 1100 Hv or less in a range of a depth of up to 3 mm from a surface of the outermost layer of the formed hardened layer 41 toward the inside of the hardened layer. This is based on the finding that cracks tend to occur in the hardened layer when a hardness of a hardened layer formed of a powder material that includes only the first powder and does not contain tungsten carbide is less than 780 Hv in terms of the average Vickers hardness and when the average Vickers hardness exceeds 1100 Hv.

In the present embodiment, at least one of the heat input adjustment step and the content adjustment step is performed when a plurality of hardened layers are deposited on/above a substrate by the laser metal deposition welding. Accordingly, the hardness can be increased gradually or stepwise from the surface of the substrate toward the surface of the outermost layer of the deposited hardened layers. Therefore, a situation in which layers each having properties greatly different from each other are joined adjacent to each other in the hardened layers deposited on/above the substrate can be avoided, and a structure by which cracks hardly occur can be formed. As a result, the hardened layer having a thickness of several millimeters can be stably formed without cracking.

In the present embodiment, during the laser metal deposition welding, the laser output is increased until at least a part of ceramic powder contained in the second powder is melted, and a part of the second powder is dissolved in the Stellite alloy of the first powder serving as a matrix, and the mechanical properties (hardness) thereof including the matrix portion are improved. Therefore, the hardness of the matrix portion can be increased, and a hardened layer having a uniform hardness distribution can be formed. Since a part of the second powder is also melted, a size of the ceramic powder remaining as a particle state is reduced, and a hardened layer having a more uniform hardness distribution is obtained.

In addition, in laser metal deposition welding using a high-hardness material, cracks tend to occur on an interface of the hardened layer or in the hardened layer due to the influence of residual stress. However, the occurrence of cracks during processing can also be prevented by increasing the laser output until temperature reaches a temperature range within which a part of the ceramic powder is melted.

By performing the laser metal deposition welding using the powder material that is obtained by mixing the first powder in a powder form with the second powder in a powder form, a complicated step for adjusting a deposition material is not required, and the material cost can be reduced. In addition, the erosion resistance of a component can be improved by overlaying a surface of the component with a hardened layer formed of a material having excellent erosion resistance.

### Example 1

Four hardened layers were formed on/above a substrate using the LMD device 100 shown in FIG. 1. The conditions for forming each layer are shown in Table 1. Here, a powder material for forming a hardened layer was prepared by mixing a powder of a Stellite alloy (Stellite #1) with a powder of tungsten carbide. In Test Examples 1 to 7, as in the conditions shown in Table 1, a laser output (heat input) and a content of tungsten carbide (WC) in the powder material (a content of the second powder) were changed for each hardened layer to be deposited. Test Examples 8 and 9 show the results when forming of only one bead was performed. In each test example, a steel plate having a dimension of 50 mm × 50 mm × 20 mm (thickness) was used as a substrate. Then, the presence or absence of a crack in an additively-manufactured object in which hardened layers were formed on/above a substrate was checked by penetrant testing (PT).

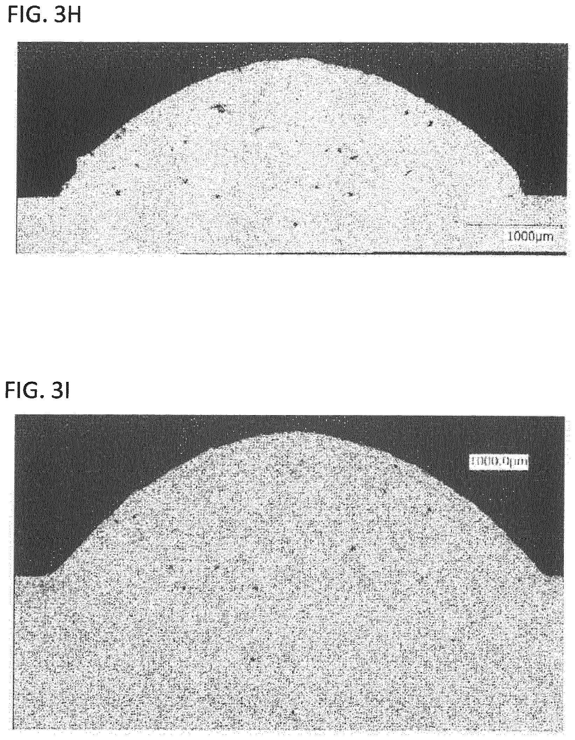

FIG. 3A to FIG. 3I are photographs showing cross sections of additively-manufactured objects in Test Examples 1 to 9, respectively.

**Table 1**

| | First layer | | Second layer | | Third layer | | Fourth layer | | Cracks not occurred: ○ Cracks occurred: × |
|---|---|---|---|---|---|---|---|---|---|
| | Laser output [kW] | WC content [wt.%] | Laser output [kW] | WC content [wt.%] | Laser output [kW] | WC content [wt.%] | Laser output [kW] | WC content [wt.%] | |
| Test Example 1 | 3.5 | Only Stellite | 3.0 | Only Stellite | 3.0 | Only Stellite | 3.0 | Only Stellite | ○ |
| Test Example 2 | 3.5 | Only Stellite | 3.0 | Only Stellite | 2.5 | Only Stellite | 2.5 | Only Stellite | ○ |
| Test Example 3 | 3.5 | 11.9 | 3.0 | 11.9 | 3.0 | 11.9 | 3.0 | 11.9 | ○ |
| Test Example 4 | 3.5 | 10.5 | 3.0 | 10.5 | 2.5 | 10.5 | 2.5 | 10.5 | ○ |
| Test Example 5 | 3.5 | 11.9 | 3.0 | 11.9 | 3.0 | 18.6 | 3.0 | 18.6 | ○ |
| Test Example 6 | 3.5 | 11.9 | 3.0 | 11.9 | 2.5 | 18.6 | 2.5 | 18.6 | ○ |
| Test Example 7 | 3.5 | 10.5 | 3.0 | 19.0 | 2.5 | 31.2 | 2.5 | 31.2 | × |
| Test Example 8 | 2.5 | Only Stellite | - | - | - | - | - | - | × |
| Test Example 9 | 3.5 | 14.5 | - | - | - | - | - | - | × |

The Vickers hardness of each hardened layer obtained in Test Examples 1 to 7 shown in Table 1 was measured every 0.1 mm from a surface of the outermost layer. As to Test Examples 8 and 9, the Vickers hardness was measured every 0.4 mm from a surface of the outermost layer. The thickness of the hardened layer per bead was approximately 2 mm.

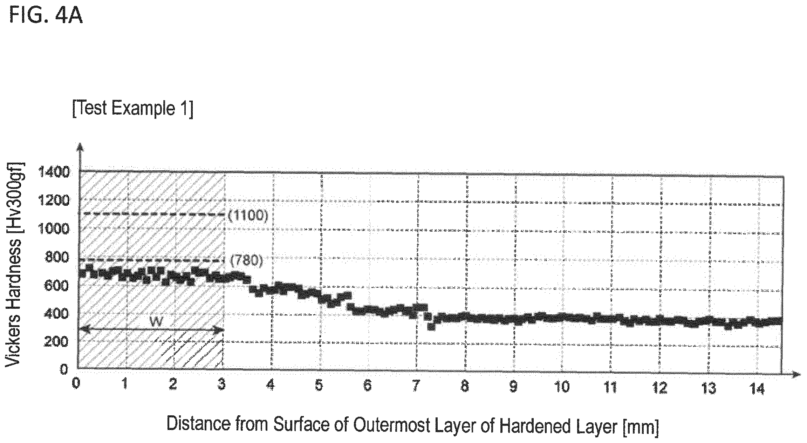

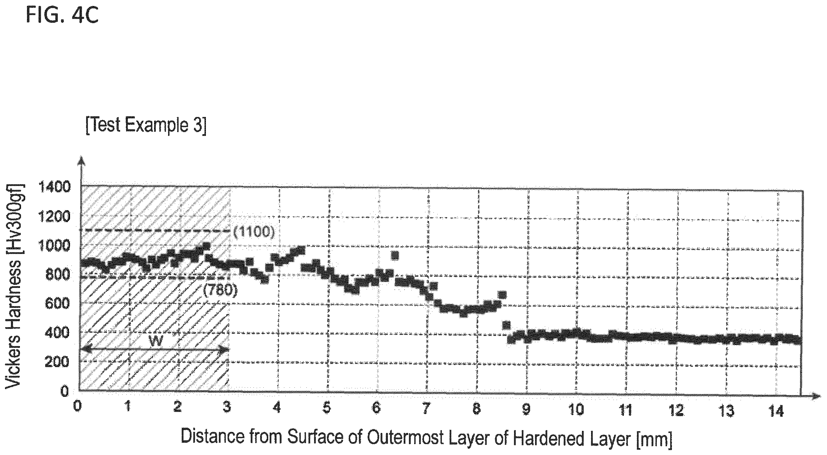

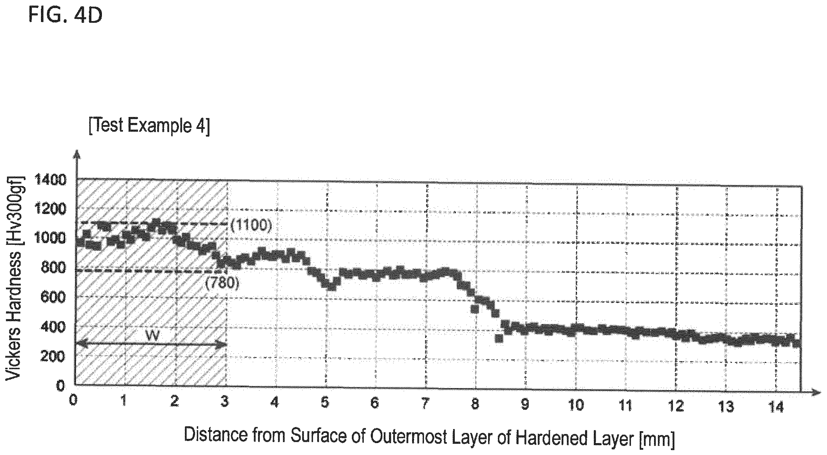

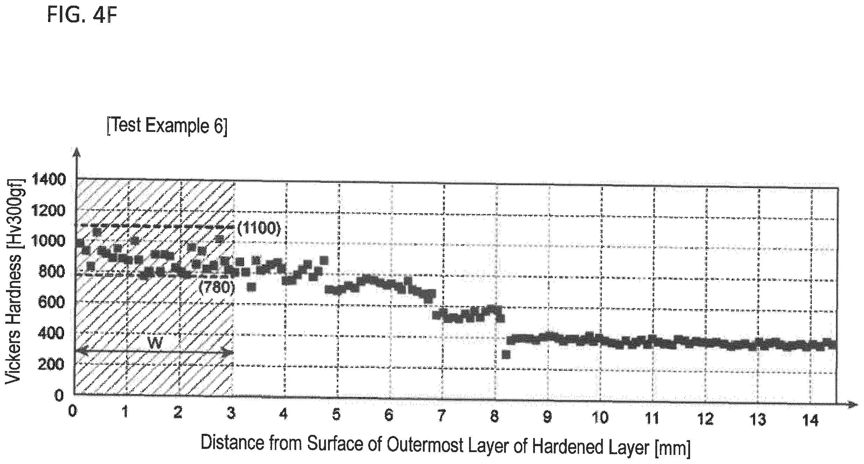

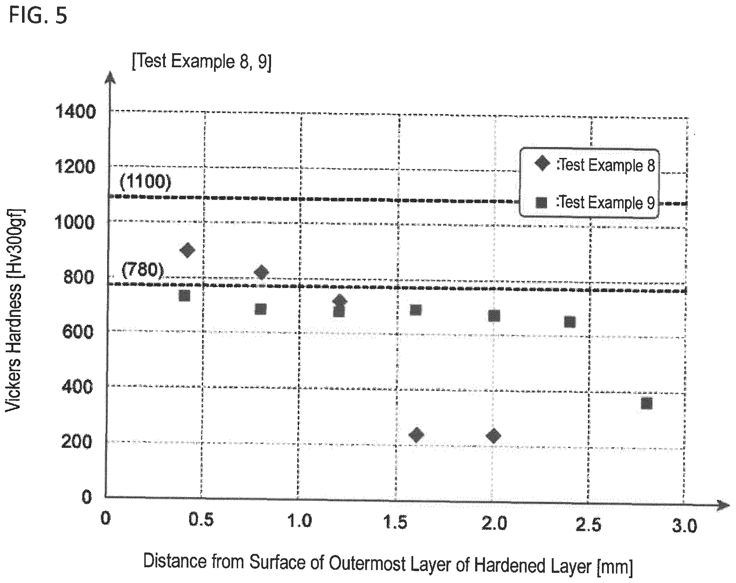

The results of the Vickers hardness distributions obtained by measuring additively-manufactured objects in Test Examples 1 to 7 are shown in FIG. 4A to FIG. 4G. The results of the Vickers hardness distributions obtained by measuring the beads in Test Examples 8 and 9 are shown in FIG. 5. The Vickers hardness is a value based on a low test force Vickers hardness test with a test load of 300 gf, which is measured by a micro Vickers hardness tester.

For the hardened layers obtained in Test Examples 1 to 7 shown in Table 1, a maximum value of the Vickers hardness and an average value of the Vickers hardness within a range of depth of up to 3 mm (hereinafter, referred to as hardness evaluation range W) from the surface of the outermost layer toward the inside of the hardened layer were determined based on the measurement results shown in FIG. 4A to FIG. 4G and FIG. 5. As to Test Examples 8 and 9, since the thickness of the hardened layer was just one bead, the Vickers hardness of only an area corresponding to the hardened layer was extracted and an average value thereof was determined. The results are shown in Table 2.

**Table 2**

| | Vickers hardness | |
|---|---|---|
| | Maximum value [Hv300gf] | Average value [Hv300gf] |
| Test Example 1 | 717.1 | 679.1 |
| Test Example 2 | 769.0 | 692.0 |
| Test Example 3 | 989.6 | 900.3 |
| Test Example 4 | 1117.9 | 995.6 |
| Test Example 5 | 1213.0 | 989.1 |
| Test Example 6 | 1062.5 | 894.4 |
| Test Example 7 | 1257.5 | 1113.8 |
| Test Example 8 | 900.3 | 818.0 |
| Test Example 9 | 733.8 | 688.0 |

### (Test Examples 1 and 2)

In Test Example 1, all hardened layers from the first hardened layer to the fourth hardened layer were formed of only a Stellite alloy, a laser output during the formation of the second hardened layer was lower than that during the formation of the first hardened layer, and laser outputs were kept constant in the formation of the second and subsequent hardened layers. In Test Example 2, all hardened layers from the first hardened layer to the fourth hardened layer were formed of only a Stellite alloy, a laser output during the formation of the second hardened layer was lower than that during the formation of the first hardened layer, and laser outputs during the formation of the third and fourth hardened layer were lower than that during the formation of the second hardened layer.

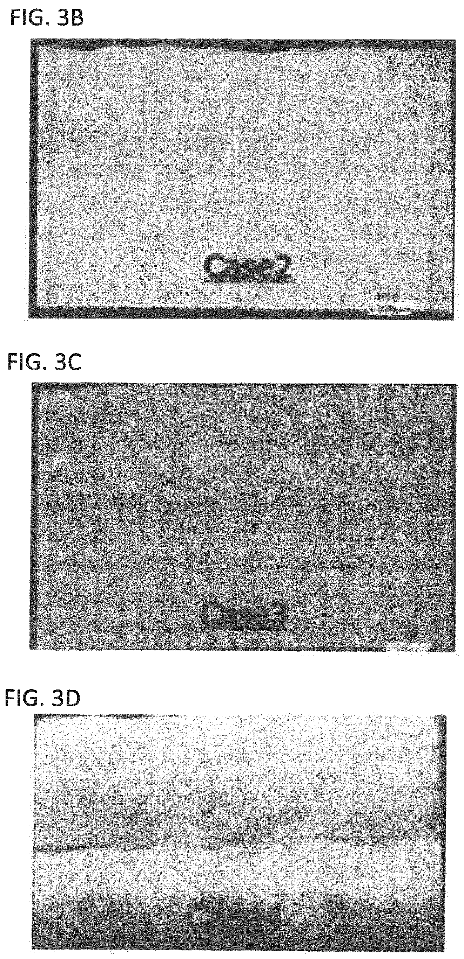

In Test Examples 1 and 2, cracks in the hardened layers were not confirmed by the penetrant testing and by the observation of the cross sections shown in FIG. 3A and FIG. 3B. However, as shown in Table 2, an average value of the Vickers hardness in the hardness evaluation range W of the hardened layer was less than 780 Hv.

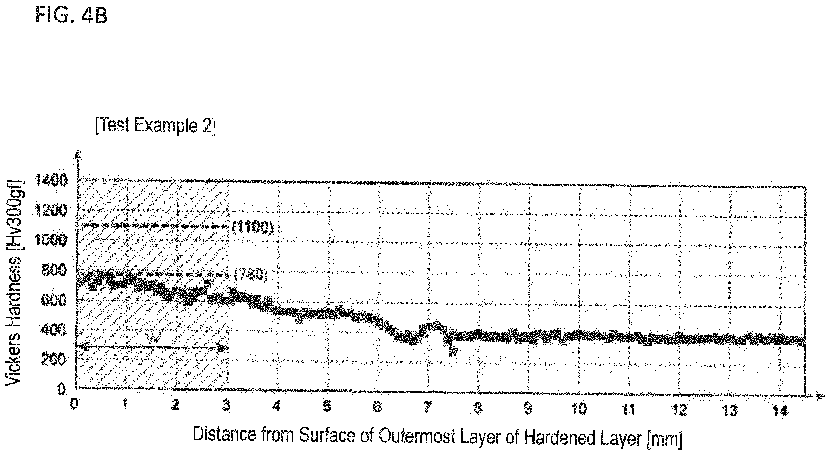

As shown in FIG. 4A and FIG. 4B and Table 2, in a case where tungsten carbide is not contained in the powder material, the Vickers hardness of the hardened layer does not exceed 780 Hv.

### (Test Example 3)

In Test Example 3, a content of tungsten carbide in the powder material for all hardened layers from the first hardened layer to the fourth hardened layer was set to 11.9 wt%. A laser output during the formation of the second hardened layer was lower than that during the formation of the first hardened layer, and laser outputs during the formation of the second and subsequent hardened layers were kept constant.

In Test Example 3, cracks in the hardened layer were not confirmed by the penetrant testing and by the observation of the cross section shown in FIG. 3C. As shown in Table 2, an average value of the Vickers hardness in the hardness evaluation range W of the hardened layer was 780 Hv or more and 1100 Hv or less, and good hardness was obtained.

### (Test Example 4)

In Test Example 4, a content of tungsten carbide in the powder material for all hardened layers from the first hardened layer to the fourth hardened layer was set to 10.5 wt%. A laser output during the formation of the second hardened layer was lower than that during the formation of the first hardened layer, and laser outputs during the formation of the third and fourth hardened layers were lower than that during the formation of the second hardened layer.

In Test Example 4, cracks in a hardened layer were not confirmed by the penetrant testing and by the observation of the cross section shown in FIG. 3D. As shown in Table 2, an average value of the Vickers hardness in the hardness evaluation range W of the hardened layer was 780 Hv or more and 1100 Hv or less, and good hardness was obtained.

### (Test Example 5)

In Test Example 5, a content of tungsten carbide in the powder material for the first and second hardened layers was set to 11.9 wt%, and a content of tungsten carbide in the powder material for the third and fourth hardened layers was increased to 18.6 wt%. During the formation of the second to fourth hardened layers, laser outputs were lower than that during the formation of the first hardened layer, and were kept constant.

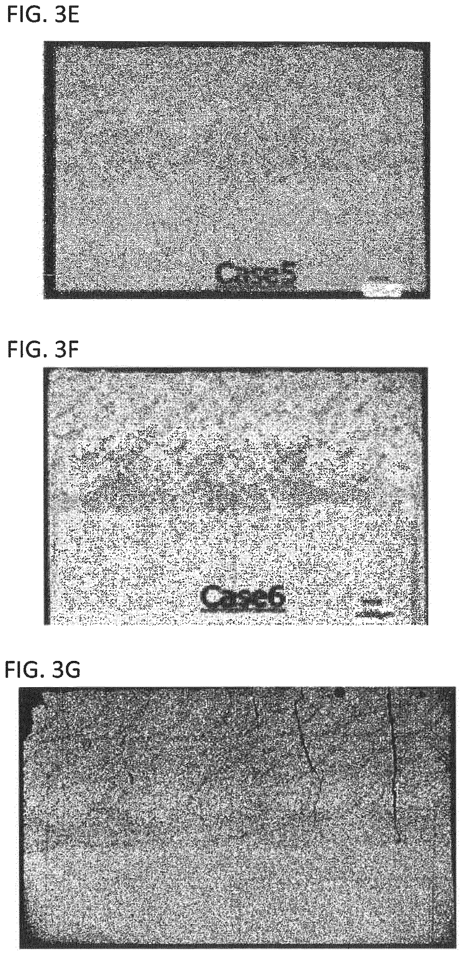

In Test Example 5, cracks in a hardened layer were not confirmed by the penetrant testing and by the observation of the cross section shown in FIG. 3E. As shown in Table 2, an average value of the Vickers hardness in the hardness evaluation range W of the hardened layer was 780 Hv or more and 1100 Hv or less, and good hardness was obtained.

From the comparison of Test Example 5 with Test Example 3 whose laser output condition was equal to that of Test Example 5, improvement of the average Vickers hardness can be seen in Test Example 5 in which the content of tungsten carbide stepwisely increased from 11.9 wt% to 18.6 wt% as compared with Test Example 3 in which the content of tungsten carbide was constant at 11.9 wt%.

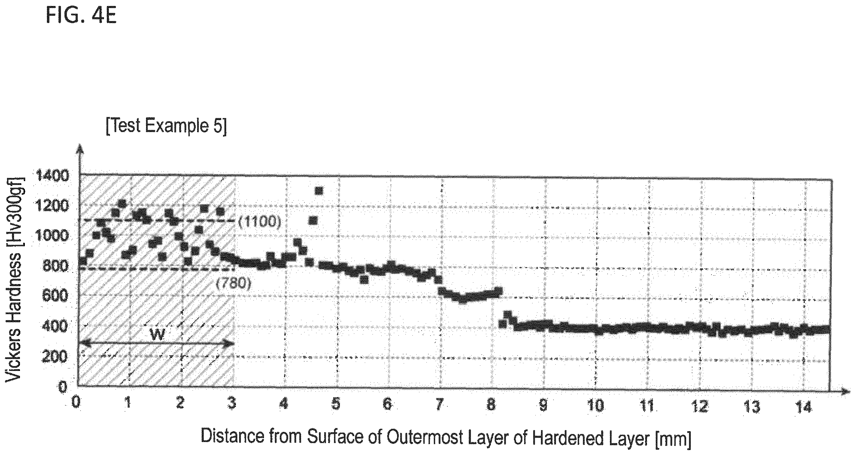

In Test Example 5, cracks did not occur in the hardened layers, and as shown in FIG. 4E and Table 2, a high Vickers hardness exceeding 1200 Hv was measured in the hardness evaluation range W of the hardened layer. It is considered that a high-hardness hardened layer is obtained by the synergistic effect of decreasing the laser output with distance from the substrate and increasing the content of tungsten carbide with distance from the substrate. In addition, it is considered that the variation in hardness distribution became large because a remaining amount of unmelted tungsten carbide increased.

### (Test Example 6)

In Test Example 6, a laser output during the formation of the second hardened layer was lower than that during the formation of the first hardened layer, and laser outputs during the formation of the third and fourth hardened layers were lower than that during the formation of the second hardened layer. In addition, a content of tungsten carbide in the powder material for the first and second hardened layers was set to 11.9 wt%, and a content of tungsten carbide in the powder material for the third and fourth hardened layers was increased to 18.6 wt%.

In Test Example 6, cracks in the hardened layer were not confirmed by the penetrant testing and by the observation of the cross section shown in FIG. 3F. As shown in Table 2, an average value of the Vickers hardness in the hardness evaluation range W of the hardened layer was 780 Hv or more and 1100 Hv or less, and good hardness was obtained.

From the comparison of Test Example 6 with Test Example 4 whose laser output condition was equal to that of Test Example 6, the average Vickers hardness decreased in Test Example 6 in which the content of tungsten carbide stepwisely increased from 11.9 wt% to 18.6 wt% stepwise as compared with Test Example 4 in which the content of tungsten carbide was constant at 10.5 wt%. This is considered to be caused by an increase in the content of tungsten carbide in the third and fourth hardened layers in Test Example 6.

### (Test Example 7)

In Test Example 7, a laser output during the formation of each of hardened layers from the first hardened layer to the third hardened layer stepwisely decreased to 3.5 kW, 3.0 kW, and 2.5 kW, and the content of tungsten carbide in the powder material for each of the hardened layers stepwisely increased to 10.5 wt%, 19.5 wt%, and 31.2 wt%. The conditions for forming the third and fourth hardened layers were the same.

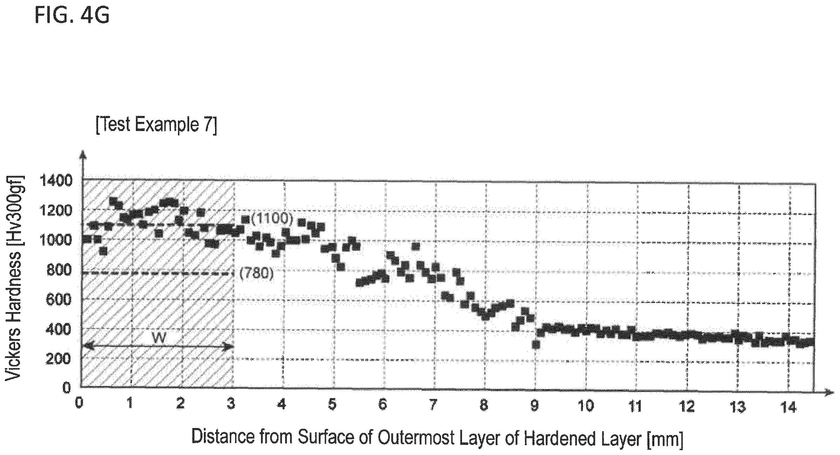

In Test Example 7, cracks in a hardened layer were confirmed by the penetrant testing and by the observation of the cross section shown in FIG. 3G. Further, as shown in Table 2, an average value of the Vickers hardness in the hardness evaluation range W of a hardened layer was 1100 Hv or more, and the following result was obtained: cracks were likely to occur in the hardened layer. Further, as shown in FIG. 4G, a high Vickers hardness exceeding 1100 Hv was measured in many of the hardness evaluation range of the hardened layer.

From comparison of Test Example 7 with Test Example 4 whose laser output condition was equal to that of Test Example 7, it is found that, even if the laser output decreased as a hardened layer was away from the substrate and the content of tungsten carbide increased as a hardened layer was away from the substrate, when the content of tungsten carbide in the powder material for each hardened layer exceeds a predetermined value, cracks are likely to occur in a hardened layer.

### (Test Example 8)

In Test Example 8, a laser output was set to 2.5 kW, and only one bead was formed as a hardened layer. In this case, cracks in the hardened layer were confirmed by the penetrant testing. From this, it can be found that the heat input is insufficient in a case where the laser output is 2.5 kW. As shown in FIG. 5, the Vickers hardness was 780 Hv or more in a range of a distance of about 0.8 mm from a surface of a hardened layer, but the Vickers hardness decreased to be less than 780 Hv when the distance from the surface exceeded about 1 mm.

### (Test Example 9)

In Test Example 9, a laser output was set to 3.5 kW, a content of tungsten carbide in the powder material was set to 14.5 wt%, and only one hardened layer was formed. In this case, cracks in the hardened layer were confirmed by the penetrant testing. From this, it can be found that there is a property difference between the substrate and the hardened layer having a content of tungsten carbide of 14.5% to the extent that a crack occurs in a case where the hardened layer is directly formed on the substrate. As shown in FIG. 5, the Vickers hardness of the hardened layers was lower than 780 Hv.

The present invention is not limited to the above embodiments, and combinations of the respective configurations of the embodiments, or changes and applications made by those skilled in the art based on the description of the specification and the well-known technology are also intended by the present invention and are included within the scope to be protected.

As described above, the present description discloses the following matters.
(1) A method for depositing a hardened layer, comprising sequentially depositing a hardened layer formed by spraying a powder material for forming a hardened layer, which is obtained by mixing a first powder containing a Stellite alloy with a second powder containing tungsten carbide, toward a substrate, and melting and solidifying the powder material on/above the substrate,
   wherein as the hardened layer to be formed is away from the substrate in a deposition direction, at least one of a heat input adjustment step and a content adjustment step is performed,
   the heat input adjustment step being a step of reducing a heat input for the powder material during formation of the hardened layer,
   the content adjustment step being a step of increasing a content of the second powder in the powder material for the hardened layer.

Thanks to the method for depositing a hardened layer, the hardness is increased gradually or in a stepwise manner from a substrate to a surface of the outermost layer of a hardened layer, and thus, a hardened layer having a thickness of several millimeters can be stably formed without causing a crack.
(2) The method for depositing a hardened layer according to (1), wherein the hardened layer is formed by laser metal deposition welding.
   Thanks to the method for depositing a hardened layer, it is possible to reduce the occurrence of heat strain and heat-affected zone, and to accurately control the thickness of the hardened layer.
(3) The method for depositing a hardened layer according to (2), wherein, in the heat input adjustment step, the heat input is adjusted by a laser output. Thanks to the method for depositing a hardened layer, the heat input for the powder material can be easily and accurately adjusted, and a desired cured layer can be formed with high accuracy.
(4) The method for depositing a hardened layer according to any one of (1) to (3), wherein the first powder in a powder form and the second powder in a powder form are mixed with each other to form the powder material.
   Thanks to the method for depositing a hardened layer, a material, which is obtained by mixing the first powder in a powder form with the second powder in a powder form, which are commercially available, can be used as the powder material, so that the powder material can be obtained at low cost without complicating the process of preparing the powder material.
(5) The method for depositing a hardened layer according to any one of (1) to (4), wherein an average Vickers hardness is 780 Hv or more and 1100 Hv or less in a range of a depth of up to 3 mm from a surface of the outermost layer of the formed hardened layer toward an inside of the hardened layer.
   Thanks to the method for depositing a hardened layer, a high-hardness hardened layer excellent in wear resistance and the like can be stably formed at a thickness of several millimeters.
(6) A method for producing an additively-manufactured object, comprising: overlaying a target overlay member with a hardened layer by the method for depositing a hardened layer according to any one of (1) to (5),
   wherein the substrate is the target overlay member.

Thanks to the method for producing an additively-manufactured object, an additively-manufactured object in which a hardened layer having a thickness of several millimeters is additively manufactured without causing a crack is obtained.

This application is based on Japanese Patent Application No. 2018-196020 filed on October 17, 2018, the contents of which are incorporated herein by reference.

### REFERENCE SIGNS LIST

- 11: Welding torch
- 15: Laser light source unit
- 17: Output adjustment unit
- 19: Powder material supply unit
- 21: Powder material preparation unit
- 23: Substrate (target overlay member)
- 35: Powder material
- 41, 41A, 41B, 41C, 41D: Hardened layer
- 43: Additively-manufactured object
- 100: Laser metal deposition device

## Claims

1. A method for depositing a hardened layer, comprising sequentially depositing a hardened layer formed by spraying a powder material for forming a hardened layer, which is obtained by mixing a first powder containing a Stellite alloy with a second powder containing tungsten carbide, toward a substrate, and melting and solidifying the powder material on/above the substrate,
wherein as the hardened layer to be formed is away from the substrate in a deposition direction, at least one of a heat input adjustment step and a content adjustment step is performed,
the heat input adjustment step being a step of reducing a heat input for the powder material during formation of the hardened layer,
the content adjustment step being a step of increasing a content of the second powder in the powder material for the hardened layer.

2. The method for depositing a hardened layer according to claim 1, wherein the hardened layer is formed by laser metal deposition welding.

3. The method for depositing a hardened layer according to claim 2, wherein, in the heat input adjustment step, the heat input is adjusted by a laser output.

4. The method for depositing a hardened layer according to any one of claims 1 to 3, wherein the first powder in a powder form and the second powder in a powder form are mixed with each other to form the powder material.

5. The method for depositing a hardened layer according to any one of claims 1 to 3, wherein an average Vickers hardness is 780 Hv or more and 1100 Hv or less in a range of a depth of up to 3 mm from a surface of the outermost layer of the formed hardened layer toward an inside of the hardened layer.

6. The method for depositing a hardened layer according to claim 4, wherein an average Vickers hardness is 780 Hv or more and 1100 Hv or less in a range of a depth of up to 3 mm from a surface of the outermost layer of the formed hardened layer toward an inside of the hardened layer.

7. A method for producing an additively-manufactured object, comprising:
overlaying a target overlay member with a hardened layer by the method for depositing a hardened layer according to any one of claims 1 to 3,
wherein the substrate is the target overlay member.

8. A method for producing an additively-manufactured object, comprising:
overlaying a target overlay member with a hardened layer by the method for depositing a hardened layer according to claim 4,
wherein the substrate is the target overlay member.

9. A method for producing an additively-manufactured object, comprising:
overlaying a target overlay member with a hardened layer by the method for depositing a hardened layer according to claim 5,
wherein the substrate is the target overlay member.
